# EUROPEAN PATENT APPLICATION

(11) **EP 4 765 467 A1**
(43) Date of publication of application: **24.06.2026**
(21) Application number: 25827335.8
(22) Date of filing: 17.06.2025
(51) Int. Cl.: H01M 50/636, H01M 50/152, H01M 50/184, H01M 50/169, H01M 10/04, H01M 50/249, B60L 50/64, B60K 1/04

(54) **BATTERY CELL, AND BATTERY PACK AND VEHICLE INCLUDING SAME**

(30) Priority: 26.06.2024 KR 20240084041; 11.06.2025 KR 20250076525
(71) Applicant: LG Energy Solution, Ltd., Seoul 07335 (KR)
(72) Inventor: KIM, Do-Gyun, Daejeon 34122 (KR); CHO, Sung-Min, Daejeon 34122 (KR); ROH, Sae-Weon, Daejeon 34122 (KR); BAEK, Jun-Ho, Daejeon 34122 (KR); JUNG, Sang-Suk, Daejeon 34122 (KR)
(74) Representative: Goddar, Heinz J.
(86) International application number: PCT/KR2025/008356
(87) International publication number: WO 2026/005370

(57) **Abstract**

A battery cell according to an embodiment of the present disclosure may include an electrode assembly in which a first electrode, a second electrode, and a separator interposed therebetween are wound around a winding axis; a can configured to accommodate the electrode assembly through an opened end formed on one side; a lid covering the opened end and having an injection port; a sealing member that has a sealing portion configured to be inserted into at least a part of the injection port and a welded portion configured to cover the injection port on an upper side of the lid and to be mutually welded to the lid, and is configured to seal the injection port; and a gasket surrounding at least a part of the sealing member.

## Description

### TECHNICAL FIELD

The present disclosure relates to a battery cell, a battery pack and a vehicle including the same.

This application is based on and claims priority from Korean Patent Application No. 10-2024-0084041, filed on June 26, 2024, with the Korean Intellectual Property Office, the disclosure of which is incorporated herein in its entirety by reference.

This application is based on and claims priority from Korean Patent Application No. 10-2025-0076525, filed on June 11, 2025, with the Korean Intellectual Property Office, the disclosure of which is incorporated herein in its entirety by reference.

### BACKGROUND ART

A cylindrical battery cell is a structure that accommodates a jelly-roll type electrode assembly inside a cylindrical metal can, and is more robust to impact or temperature than a pouch type battery. Accordingly, there is an increasing demand for using a metal can type cell as a battery cell applied to a vehicle battery pack.

The process of manufacturing a battery cell utilizing a cylindrical can includes deep drawing a metal sheet to mold a circular bottom portion and a circular tubular side wall portion connected thereto, accommodating an electrode assembly therein, and then covering the opened end of the side wall portion with a lid to finish.

The method of covering the opened end of the battery can with a lid and fixing the lid and the battery can may be applied by crimping or seam welding.

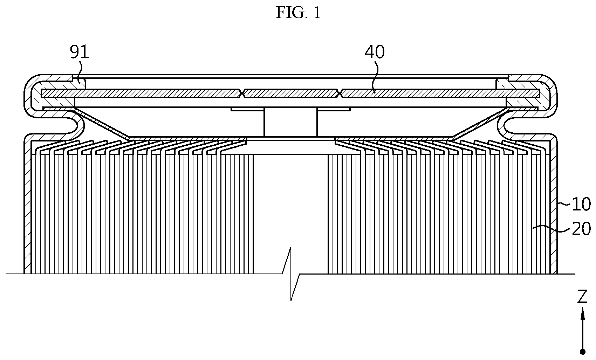

FIG. 1 is a view showing a method of fixing a lid and a battery can by a conventional crimping method.

Referring to FIG. 1, crimping is a method of fixing the lid 40 by physically pressing the edge of the lid 40 to the opened end of the can 10 with a sealing ring 91 interposed therebetween. Since crimping is a physical fixing method that does not apply heat, it is allowable to work while the electrolyte is injected into the can. Therefore, the crimping method has the advantage of being able to omit a separate injection port structure and a structure for sealing the same. However, crimping is structurally more complex compared to welding, and thus there are limitations in securing the internal volume of the can capable of accommodating the electrode assembly 20.

In contrast, seam welding is a method of welding the circumference of the front end of the side wall portion of the battery can and the circumference of the edge of the lid together along the circumferential direction, and since the fixing structure is simple, the volume of the electrode assembly that can be accommodated inside the battery can may be further secured. Therefore, the seam welding method is more advantageous in securing electric capacity compared to the same volume of the battery can.

However, when the battery can is filled with electrolyte and then the opened end of the battery can is covered with the lid and welded, there is a possibility that the high temperature heat or plasma flame generated by welding may be deteriorated or ignited when it contacts electrolyte vapor in the air at a certain concentration or higher.

For example, if the material of the can and the lid is SUS, the surface temperature may rise to 1400 degrees Celsius, which is the melting point of SUS. This high temperature heat may cause the ignition of electrolyte.

Accordingly, when the circumference of the opened end of the battery can and the lid are to be fixed by seam welding, a method of preparing a battery can with an injection port provided at the bottom portion or a lid provided with the injection port, accommodating an electrode assembly inside the battery can, injecting an electrolyte through the injection port provided at the lid or the bottom portion of the battery can after seam welding of the battery can and the lid, and sealing the injection port to finish after completing the injection, may be applied.

For example, a sealing member such as a metal ball may be forcibly pressed into the injection port to seal and fix the injection port. This is a method in which a metal ball having a larger diameter than the inner circumferential surface of the injection port is forcibly pressed into the injection port, and the elastic deformation of the inner circumferential surface of the injection port and the metal ball causes their surfaces to be mutually compressed, resulting in sealing.

Conventionally, there has been a case of applying an aluminum ball as a metal ball for sealing the injection port. The aluminum ball may be fired at a low temperature, and thus when forcibly pressing an aluminum ball slightly larger than the injection port, the shape of the aluminum may be deformed to seal the injection port. However, when the lid itself where the injection port is formed is a negative electrode of the battery electrode, the aluminum ball cannot be used.

On the other hand, if a steel ball is used instead of aluminum, sealing should be achieved between the rigid lid and the rigid ball. However, during the process of forcibly pressing the steel ball into the injection port of the lid, scratches parallel to the press-in direction occur on the inner circumferential surface of the injection port and the surface of the steel ball. These scratches cause a problem of acting as channels through which gas leaks out of the battery cell.

However, if the steel ball is pressed in with a very strong force to eliminate even these channels, the lid itself is deformed in the press-in direction, which may cause not only an appearance defect of the lid, but also a short circuit due to the contact between the deformed lid and the electrode assembly inside the can.

In addition, blind riveting may be applied to physically seal the injection port. This method also requires sealing between the rigid rivet and the rigid lid, but scratches may occur during the riveting process, causing the same problem as above.

Meanwhile, in order to reduce the possibility of gas leakage between the rigid lid and the rigid injection port cap, a method of covering the injection port with a steel cap and then welding the gap between the cap and the injection port to seal it may be considered. However, even with this method, the heat generated when welding the cap to the lid causes the gas in which the electrolyte inside the can is vaporized to be discharged. Then, there is a risk that cracks or gas channels may be formed at the welded portion along the gas discharge path, and a risk of fire due to high-temperature heat, gas, and oxygen.

Therefore, there is a need for a sealing method that has no electrolyte leakage, prevents gas leakage due to electrolyte vaporization, and seals the lid without deformation.

### DISCLOSURE

### Technical Problem

The present disclosure is devised to solve the above-described problems, and therefore the present disclosure is directed to providing a battery cell with an improved sealing structure of an injection port and a method for manufacturing the same.

Additionally, the present disclosure is directed to providing a sealing structure of the injection port and a sealing method thereof that may not cause welding defects or ignition at the welding part due to electrolyte gas even when welding is applied for sealing the injection port, and improve stability.

Additionally, the present disclosure is directed to providing a sealing structure of the injection port and a sealing method thereof that may minimize the number of parts and reduce assembly man-hours.

Additionally, the present disclosure is directed to providing a method for manufacturing a battery cell using this sealing method, as another object thereof.

Additionally, the present disclosure is directed to providing a battery cell with high energy density by excluding a beading crimping structure from a battery cell, and a vehicle equipped with a battery pack applying the same.

The technical problems of the present disclosure are not limited to the above-described objects, and other objects and advantages of the present disclosure not mentioned herein may be understood by the following description, and will be more clearly understood by the embodiments of the present disclosure. Additionally, it will be easily understood that the objects and advantages of the present disclosure may be realized by the means and combinations thereof indicated in the claims.

### Technical Solution

A battery cell according to an embodiment of the present disclosure for solving the above-described problem may include an electrode assembly in which a first electrode, a second electrode, and a separator interposed therebetween are wound around a winding axis; a can configured to accommodate the electrode assembly through an opened end formed on one side; a lid covering the opened end and having an injection port; a sealing member that has a sealing portion configured to be inserted into at least a part of the injection port and a welded portion configured to cover the injection port on an upper side of the lid and to be mutually welded to the lid, and is configured to seal the injection port; and a gasket surrounding at least a part of the sealing member.

The gasket may have a ring shape surrounding at least a part of the side surface of the sealing portion.

The gasket may be positioned between the injection port and the sealing portion, and may be configured to seal the space between the injection port and the sealing portion.

The outer diameter of the gasket may be larger than the inner diameter of the injection port.

The welded portion may extend outward in a radial direction perpendicular to the winding axis direction from the upper end of the sealing portion.

The diameter of the welded portion may be larger than the inner diameter of the injection port.

The lid may include a body portion; and a recessed portion that surrounds the injection port and is recessed downward from the body portion in the winding axis direction.

The welded portion may be configured to be seated on the recessed portion.

The sealing member may have a groove portion recessed radially inward.

The gasket may be seated in the groove portion.

The maximum horizontal length of the gasket may be greater than the horizontal length of the groove portion.

The can and the lid may be thermally bonded.

A method for manufacturing a battery cell according to an embodiment of the present disclosure for solving another above-described problem may include a step of covering the opened end of the can with the lid while accommodating the electrode assembly in the can; a step of thermally bonding the edge of the lid to the can; a step of injecting an electrolyte into the can through the injection port of the lid; a step of coupling a gasket to the sealing portion of a sealing member; a step of inserting the sealing member coupled to the gasket into the injection port to seal the space between the injection port and the sealing member; and a step of welding the welded portion of the sealing member and the lid.

A battery pack according to an embodiment of the present disclosure may include a battery cell according to an embodiment of the present disclosure.

A vehicle according to an embodiment of the present disclosure for solving the above-described problem may include a battery pack according to an embodiment of the present disclosure.

### Advantageous Effects

According to one aspect of the present disclosure, there is provided a sealing structure of the injection port and a sealing method thereof that may not cause welding defects or ignition at the welding part due to electrolyte gas even when welding is applied for sealing the injection port, and improve the reliability of the injection port sealing.

According to one aspect of the present disclosure, only a sealing member, which is a single coupling component, is configured to be inserted into the injection port to relatively widen the internal space of the cell and to allow the width of the injection port to be formed wider, thereby improving injection efficiency.

According to one aspect of the present disclosure, at least a part of the side surface of the sealing member is surrounded by a gasket to secure a temporary sealing force, thereby preventing external leakage of electrolyte vapor, and a part of the lid and the edge of the sealing member are thermally bonded to secure a high final sealing force. Since thermal bonding may be performed while preventing external leakage of electrolyte vapor, there is an effect of preventing welding defects and ignition, for example, when laser welding is used for thermal bonding.

According to one aspect of the present disclosure, sealing may be performed using two processes, namely press-in and thermal bonding, with a single coupled component. Accordingly, the number of parts may be reduced and the assembly man-hours may be reduced.

The sealing member according to one aspect of the present disclosure is configured to be coupled to a gasket to implement double sealing.

However, effects to be obtained by the present disclosure are not limited to the above-described effects, and other effects not mentioned herein may be clearly understood by those skilled in the art from the following description of the present disclosure.

### DESCRIPTION OF DRAWINGS

The accompanying drawings illustrate preferred embodiments of the present disclosure and together with the foregoing disclosure, serve to provide further understanding of the technical features of the present disclosure, and thus, the present disclosure is not construed as being limited to the drawing.
FIG. 1 is a view showing a method of fixing a lid and a battery can by a conventional crimping method.
FIG. 2 is a perspective view of a battery cell according to an embodiment of the present disclosure.
FIG. 3 is a perspective view showing a state before laminating a first electrode, a second electrode, and separators for manufacturing an electrode assembly to be accommodated in a battery can according to an embodiment of the present disclosure.
FIG. 4 is a perspective view of an electrode assembly manufactured by winding the laminate of FIG. 3 into a jelly-roll shape.
FIGS. 5 and 6 are perspective views showing a state in which a current collector plate is respectively bonded to both ends of an electrode assembly according to an embodiment of the present disclosure.
FIG. 7 is a cross-sectional view showing a process of accommodating an electrode assembly according to an embodiment of the present disclosure in a battery can.
FIG. 8 is a cross-sectional view showing a state in which a can accommodating an electrode assembly according to an embodiment of the present disclosure is covered with a lid and sealed.
FIG. 9 is a cross-sectional view showing a state in which the injection port of a lid is sealed by a sealing member according to an embodiment of the present disclosure.
FIG. 10 is a cross-sectional view showing a state before a sealing member is inserted into the injection port of a lid according to an embodiment of the present disclosure.
FIG. 11 is a cross-sectional view showing a state after a sealing member is inserted into the injection port of a lid according to an embodiment of the present disclosure.
FIG. 12 is a perspective view showing a state before a sealing member and a gasket are coupled according to an embodiment of the present disclosure.
FIG. 13 is a cross-sectional view showing a state before a sealing member is inserted into the injection port of a lid according to another embodiment of the present disclosure.
FIG. 14 is a cross-sectional view showing a state after a sealing member is inserted into the injection port of a lid according to another embodiment of the present disclosure.
FIG. 15 is a cross-sectional view showing a sealing member and a gasket according to still another embodiment of the present disclosure.
FIG. 16 is a flow chart of a method for manufacturing a battery cell to which the injection port sealing structure of the present disclosure is applied.
FIG. 17 is a view for describing a battery pack according to an embodiment of the present disclosure.
FIG. 18 is a view for describing a vehicle including the battery pack of FIG. 17.

### BEST MODE

Hereinafter, preferred embodiments of the present disclosure will be described in detail with reference to the accompanying drawings.

The present disclosure is not limited to the embodiments disclosed below, but may be modified in various ways and implemented in various forms. The present embodiments are provided merely to ensure complete disclosure of the present disclosure and to fully inform those having ordinary skill in the art of the scope of the disclosure. Therefore, the present disclosure is not limited to the embodiments disclosed below, but should be understood to include all modifications, equivalents, and substitutes within the technical ideas and scope of the present disclosure, as well as the substitution or addition of the configurations of one embodiment to those of another.

Additionally, the present disclosure includes various embodiments. For each embodiment, redundant descriptions of substantially identical or similar configurations will be omitted, and differences will be mainly described.

The accompanying drawings are intended solely to facilitate understanding of the embodiments disclosed herein, and the technical ideas disclosed herein are not limited by the accompanying drawings. All modifications, equivalents, and substitutes within the ideas and technical scope of the present disclosure should be understood as being included herein. In the drawings, components may be exaggerated in size or thickness for ease of understanding, but this should not be interpreted as limiting the scope of protection of the present disclosure.

The terms used herein are solely used to describe specific implementations or embodiments and are not intended to limit the present disclosure. And, singular expressions include plural expressions unless the context clearly indicates otherwise. Terms such as 'include' and 'comprise' in this specification are intended to specify the presence of a feature, number, step, operation, component, part, or combination thereof described herein. That is, terms such as 'include' and 'comprise' in this specification should be understood as not excluding the presence or addition of one or more other features, numbers, steps, operations, components, parts, or combinations thereof in advance.

Terms including ordinal numbers, such as first and second, may be used to describe various components, but such components are not limited by these terms. These terms are used solely to distinguish one component from another. Therefore, unless stated to the contrary, it is obvious that the first component may be the second component.

Throughout the specification, unless expressly stated to the contrary, each component may be singular or plural.

Singular expressions used herein include plural expressions unless the context clearly indicates otherwise. In the present application, terms such as 'comprise' or 'include' should not be construed as necessarily including all of the various components or steps described in the specification, but rather should be construed as not including some of the components or steps, or as further including additional components or steps.

When it is described that a component is "connected" or "coupled" to another component, the components may be directly connected to or coupled to each other, but it should be understood that there may be other components therebetween. On the other hand, when it is described that a component is "directly connected" or "directly coupled" to another component, it should be understood that there are no other components therebetween.

When it is described that any component is "above" or "below" another component, it should be understood that the component is disposed directly above another component, and furthermore, there may also be the other components therebetween.

Unless otherwise defined, all terms used herein, including technical or scientific terms, have the same meanings as commonly understood by those having ordinary skill in the art to which the present disclosure pertains. Terms defined in commonly used dictionaries should be interpreted to have meanings consistent with their meanings in the context of the relevant technology, and should not be interpreted in an ideal or overly formal sense unless explicitly defined herein.

Meanwhile, terms indicating directions such as upper, lower, left, right, front, and rear may be used in the present disclosure, but these terms are only for convenience of description, and it is obvious to those skilled in the art that the terms may vary depending on the position, arrangement, rotation of a reference object, or the position of an observer.

Throughout the specification, when referring to "A and/or B", it means A, B or A and B, unless expressly stated to the contrary, and when referring to "C to D", it means C or more and D or less, unless expressly stated to the contrary.

In describing the embodiments, the winding axis direction refers to a direction in which the axis forming the winding center of the jelly-roll type electrode assembly extends, the radial direction refers to a direction closer to (centripetal) or away from (centrifugal) the axis, and the circumferential (circumference) direction refers to a direction surrounding the axis.

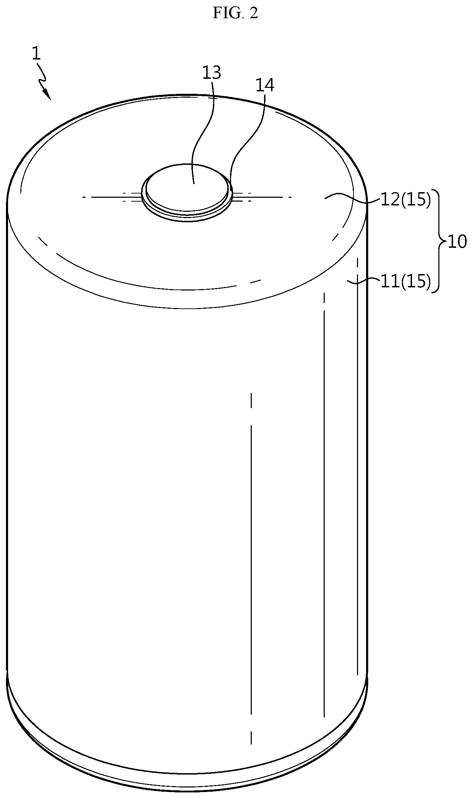

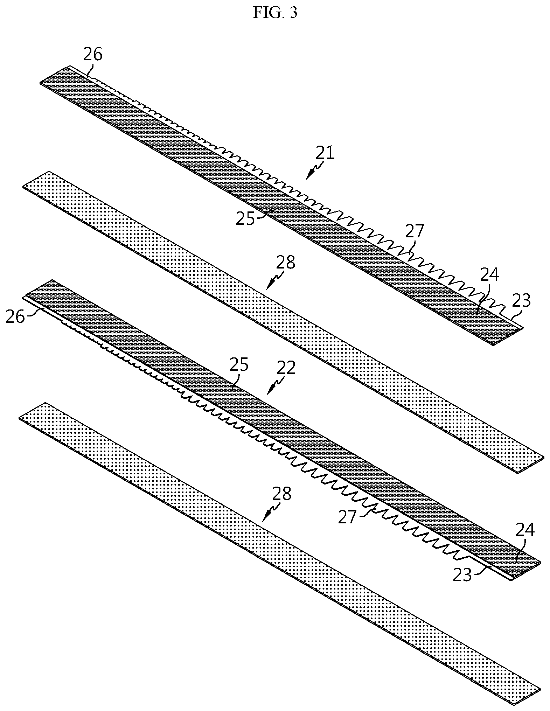

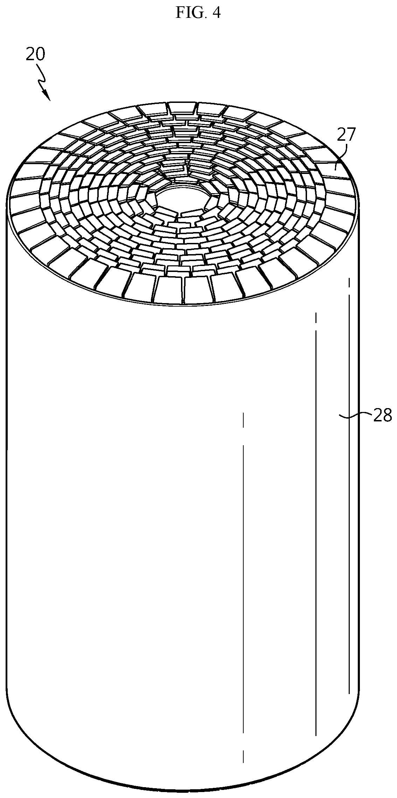

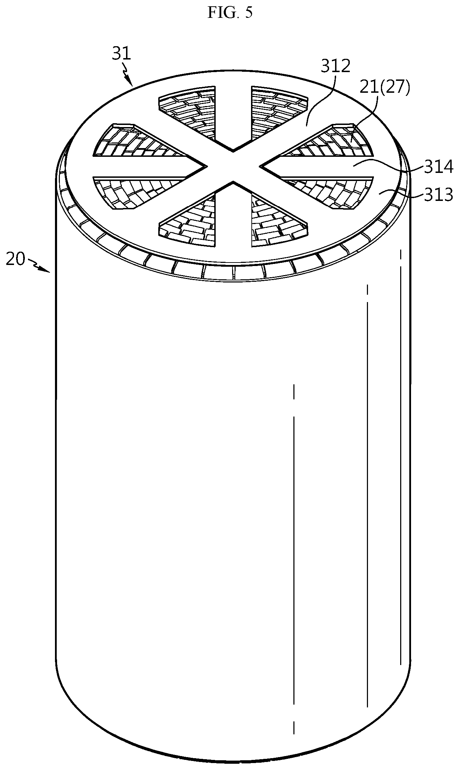

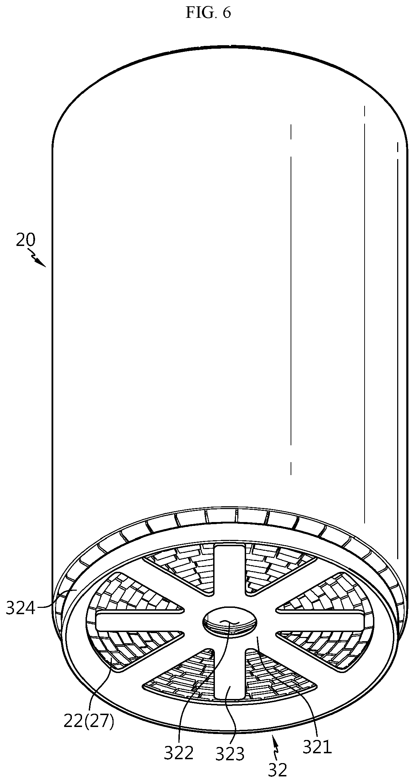

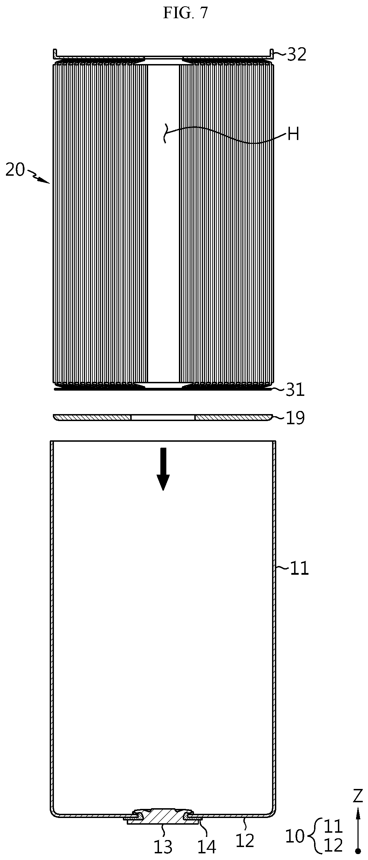

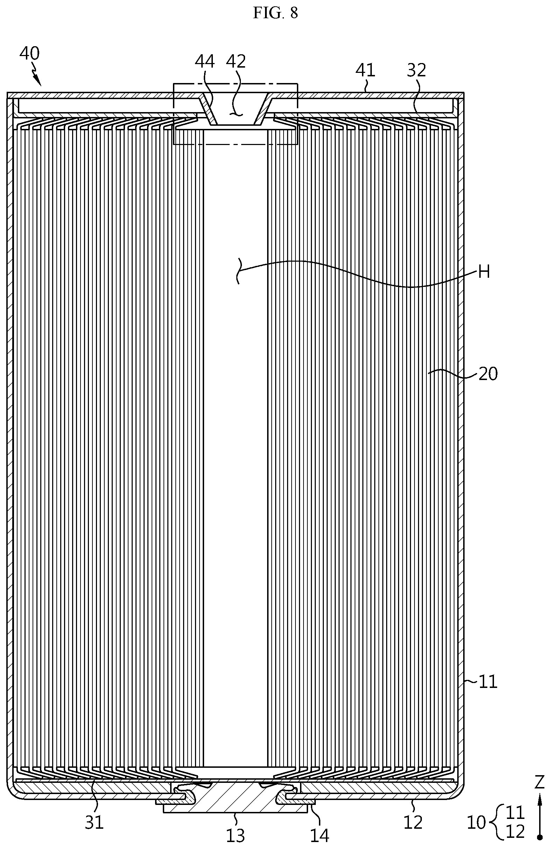

FIG. 2 is a perspective view of a battery cell according to an embodiment of the present disclosure. FIG. 3 is a perspective view showing a state before laminating a first electrode, a second electrode, and separators for manufacturing an electrode assembly to be accommodated in a battery can according to an embodiment of the present disclosure. FIG. 4 is a perspective view of an electrode assembly manufactured by winding the laminate of FIG. 3 into a jelly-roll shape. FIGS. 5 and 6 are perspective views showing a state in which a current collector plate is respectively bonded to both ends of an electrode assembly according to an embodiment of the present disclosure. FIG. 7 is a cross-sectional view showing a process of accommodating an electrode assembly in a battery can. FIG. 8 is a cross-sectional view showing a state in which a can accommodating an electrode assembly according to an embodiment of the present disclosure is covered with a lid and sealed.

Hereinafter, an embodiment of a battery cell 1 to which the injection port sealing structure of the present disclosure is applied will be described in detail with reference to FIGS. 2 to 8.

The battery cell 1 may be manufactured by embedding a cylindrical electrode assembly 20 inside a cylindrical battery can 10.

The battery cell 1 of the embodiment may include an electrode assembly 20, current collector plates 31, 32 electrically connected to the electrode assembly 20, and a can 10 accommodating the electrode assembly 20 and the current collector plates 31, 32.

The can 10 may include a side wall portion 11 extending in the winding axis direction between a first end and a second end, and a bottom portion 12 connected to the first end of the side wall portion 11 and extending in the radial direction. The second end of the side wall portion 11 in the winding axis direction may be open.

The opened end of the side wall portion 11 may be sealed by covering it with a lid 40 after accommodating the electrode assembly 20 in the can 10.

The bottom portion 12 may have a disk shape with a hole formed in the center, and the side wall portion 11 may have a circular tubular shape.

The bottom portion 12 and the side wall portion 11 may be manufactured by molding a metal sheet with nickel plating on the surface of steel by a deep drawing process, and trimming the front end of the side wall portion 11 with a punch while gripping it with a blank holder. Of course, the material of the can 10 is not limited thereto.

A first electrode terminal 13 may be fitted into the hole. The first electrode terminal 13 may be riveted and fixed to the bottom portion 12 with a terminal gasket 14 interposed therebetween. The terminal gasket 14 may be interposed between the first electrode terminal 13 and the bottom portion 12 to seal the inside and outside of the can 10 to prevent leakage of the electrolyte, and to electrically insulate the first electrode terminal 13 from the bottom portion 12.

However, the connection method between the first electrode terminal 13 and the bottom portion 12 is not limited thereto. For example, as long as the structure is capable of providing sealing between the first electrode terminal 13 and the bottom portion 12 and electrically insulating the first electrode terminal 13 from the bottom portion 12, various other fixing methods, such as a bolt-nut coupling method, a glass seal method, or a chrome coating & PP-MAH thermal bonding method, may also be applied.

The first electrode terminal 13 may have a first polarity, and the can 10 may have a second polarity. That is, the bottom portion 12 of the can 10, the side wall portion 11 connected thereto, and the lid 40 connected to the side wall portion 11, which will be described later, may all have the second polarity.

Accordingly, the battery cell 1 may have both the first electrode terminal 13 and the second electrode terminal 15 disposed at the end in the winding axis, that is, the closed end, provided with the bottom portion 12. Then, the battery cell 1 may have both a busbar connected to the first electrode terminal 13 and a busbar connected to the second electrode terminal 15 positioned at the top of the battery cell 1.

In one example, the first electrode terminal 13 may be a positive electrode terminal, and the second electrode terminal 15 may be a negative electrode terminal. Of course, the opposite may also be true.

An electrode assembly 20 is accommodated within the can 10.

The electrode assembly 20 may be in the form of a jelly-roll in which the first electrode 21, the second electrode 22, and the separator 28 interposed therebetween are wound in the winding axis direction. Specifically, the electrode assembly 20 may be manufactured in the cylindrical form of a jelly-roll by preparing a first electrode 21, a second electrode 22, and separators 28 that extend in the length direction with a predetermined width as shown in FIG. 3, and forming a laminate by sequentially laminating the first electrode 21, the separator 28, the second electrode 22, and the separator 28, and then winding the laminate around a mandrel axis as shown in FIG. 4. The structure of the electrode assembly 20 is not limited by the embodiment and may have a winding structure well known in the art.

The first electrode 21 may be a positive electrode, and the second electrode 22 may be a negative electrode. Of course, the opposite may also be true.

The first electrode 21 and the second electrode 22 are manufactured in the form of sheets. The electrode sheet is manufactured in the form of an active material layer 24 being applied to the surface of a metal foil 23. The electrode sheet has a coated portion 25 where an active material layer 24 is applied, and an uncoated portion 26 where an active material layer 24 is not applied. The positive electrode sheet has an uncoated portion 26 on one side in the width direction, and the negative electrode sheet has an uncoated portion 26 on the other side in the width direction.

The uncoated portion 26 is exposed or protrudes from the laminate in the width direction. The uncoated portion 26 itself functions as an electrode tab.

The uncoated portion 26 may be notched at predetermined intervals to form notching tabs 27 in the shape of flags.

In the embodiment, it is illustrated that the notching tabs 27 have an equilateral trapezoidal shape. However, their shapes may be various shapes such as a semicircle, a semi-ellipse, a triangle, a rectangle, a parallelogram, and the like.

Additionally, the embodiment illustrates that the notching tabs 27 arranged along the length direction have the same width. However, the width of the notching tabs may increase gradually or stepwise from the mandrel side to the outer circumferential side.

Additionally, the embodiment illustrates that the height of the notching tabs 27 increases stepwise from the mandrel side to the outer circumferential side. However, the height of these notching tabs may be implemented in a constant or gradually decreasing form.

Additionally, the embodiment illustrates a structure in which the notching tabs 27 are deleted in a predetermined section of the centripetal end of the uncoated portion 26 and a predetermined section of the centrifugal end thereof. However, it is obvious that the notching tabs may not be deleted at the centripetal end of the uncoated portion, and the notching tabs may not be deleted at the centrifugal end of the uncoated portion.

In the jelly-roll type electrode assembly 20, the notching tab 27 may be bent radially to be flattened as illustrated in FIG. 4. The notching tab 27 may be bent radially inward or outward. The embodiment illustrates a structure in which the notching tab 27 is bent radially inward.

The notching tab 27 may be bent one by one during the process of forming a jelly-roll type electrode assembly 20 by winding the laminate. Alternatively, the notching tab 27 may be bent all at once after the laminate is wound to form a jelly-roll type electrode assembly.

The notching tabs 27 of the first electrode 21 and the notching tabs 27 of the second electrode 22 that are bent radially and overlapped in this way may each provide a plane substantially perpendicular to the winding axis direction at both ends of the electrode assembly 20 in the winding axis direction.

A first current collector plate 31 and a second current collector plate 32 may each be bonded to the substantially flat surface provided by bending the notching tab 27 exposed at both ends of the electrode assembly 20 in the winding axis direction as illustrated in FIGS. 5 and 6.

The embodiment illustrates that the first current collector plate 31 is a positive electrode current collector plate and the second current collector plate 32 is a negative electrode current collector plate. The first current collector plate 31 may be made of aluminum and the second current collector plate 32 may be made of copper.

The current collector plates 31, 32 may be manufactured by punching, trimming, piercing, and bending a metal sheet.

Referring to FIG. 5, the first current collector plate 31 may include a first terminal connection portion 312 extending radially from the center, a ring portion 313 connecting the centrifugal edge of the first terminal connection portion 312 in a circumferential direction, and a first electrode connection portion 314 that extends centripetally from the ring portion 313 and is not connected to the first terminal connection portion 312. The center of the first terminal connection portion 312 may cover at least a part of the winding center hole H of the electrode assembly 20.

The first electrode connection portion 314 is bonded to the notching tab 27 of the first electrode 21 of the electrode assembly 20 by laser welding or the like prior to placing the electrode assembly 20 in the can 10. The welding line of the laser may extend radially.

Referring to FIG. 6, the second current collector plate 32 may include an inner ring portion 321 that defines a hole 322 corresponding to the winding center hole H of the electrode assembly 20 and is provided in a form surrounding the winding center hole H, a second electrode connection portion 323 extending radially from the inner ring portion 321, and a second terminal connection portion 324 that is disposed on the centrifugal side than the second electrode connection portion 323 and is connected to the inner ring portion 321. The second terminal connection portion 324 may have the form of an outer ring surrounding the edge of the second current collector plate 32.

The second electrode connection portion 323 may be bonded to the notching tab 27 of the second electrode 22 of the electrode assembly 20 by laser welding or the like prior to placing the electrode assembly 20 in the can 10. The welding line of the laser may extend radially.

However, the shape and structure of the first current collector plate 31 and the second current collector plate 32 are not limited by the above embodiment, and may be designed and changed in various ways. A structure in which the second current collector plate 32 is omitted is also possible.

As illustrated in FIG. 7, the electrode assembly 20 may be accommodated in the can 10 in a state where the first current collector plate 31 is aligned toward the bottom portion 12 of the can 10. At this time, an insulator 19 may be interposed between the first current collector plate 31 and the bottom portion 12 of the can 10 to electrically insulate the first current collector plate 31 from the bottom portion 12.

In a state where the electrode assembly 20 is accommodated inside the can 10, the notching tab 27 of the second electrode 22 and the second current collector plate 32 may be disposed to face the opened end of the side wall portion 11.

The first terminal connection portion 312 of the first current collector plate 31 may be bonded to the first electrode terminal 13 fixed to the can 10 by means of resistance welding, ultrasonic welding, laser welding, or the like. A welding device for welding the first current collector plate 31 and the first electrode terminal 13 may approach the back surface of the center of the first terminal connection portion 312 of the first current collector plate 31 through the open part of the can 10, the hole 322 of the second current collector plate 32, and the winding center hole H of the electrode assembly 20 to perform welding. Of course, in addition to this, the first current collector plate 31 and the first electrode terminal 13 may also be bonded by means of brazing, soldering, or the like. That is, the first current collector plate 31 and the first electrode terminal 13 may be coupled to each other in various ways as long as they may be electrically connected and fixed to each other. However, the present disclosure does not exclude a structure in which the positive electrode tab is directly electrically connected to the positive electrode terminal in a state where the positive electrode current collector plate is omitted.

In a state where the electrode assembly 20 is accommodated in the can 10, the opened end of the can 10 may be sealed by covering it with a lid 40 as illustrated in FIG. 8.

The can 10 and the lid 40 may be thermally bonded. The circumference of the front end of the side wall portion of the battery can 10 and the circumference of the edge of the lid 40 may be welded together along the circumferential direction. This may be defined as a seam welding method. Since the fixing structure is simple, the volume of the electrode assembly 20 that can be accommodated within the can 10 may be further secured. Therefore, the seam welding method is more advantageous in securing electric capacity compared to the same volume of the can 10.

Specifically, when the circumference of the opened end of the can 10 and the lid are to be fixed by seam welding, a method of preparing a can 10 with an injection port provided at the bottom portion or a lid 40 provided with the injection port, accommodating an electrode assembly 20 inside the can 10, injecting an electrolyte through the injection port provided at the lid 40 or the bottom portion of the can 10 after seam welding of the can 10 and the lid 40, and sealing the injection port with a plug or a sealing member 50 to finish after completing the injection, may be applied.

The second terminal connection portion 324 of the second current collector plate 32 and the second end of the side wall portion 11 may be bonded by a method such as welding. The can 10 and the edge of the lid 40 may be sealed by a method such as welding. In one example, after the second current collector plate 32 and the can 10 are bonded, the lid 40 and the can 10 may be bonded. In another example, after the second current collector plate 32 and the lid 40 are bonded, the lid 40 and the can 10 may be bonded. In another example, the second current collector plate 32, the can 10, and the lid 40 may be welded at one time.

The edge of the lid 40 may by bonded to the edge of the opened end of the can 10 to be electrically connected. The can 10 or the inner surface of the lid 40 may be electrically connected to the second current collector plate 32. The second current collector plate 32 is bonded to the notching tab 27 of the second electrode 22 of the electrode assembly 20 accommodated inside the can 10 of the battery cell 1, and thus when the lid 40 is electrically connected to the second current collector plate 32, the lid 40 may also be electrically connected to the notching tab 27 of the second electrode 22 of the electrode assembly 20. In a structure where the second current collector plate 32 is omitted, the shape of the lid 40 may be changed so that the lid 40 may be directly electrically connected to the notching tab 27 of the second electrode 22 of the electrode assembly 20. After sealing the can 10 with the lid 40, the electrolyte may be injected into the can 10 through the injection port 42 provided in the lid 40.

The lid 40 may be made of, for example, low-carbon steel. The lid 40 may be made of, for example, nickel-plated steel (Ni plated steel), cold-rolled steel (SPCC or SPCE), or stainless steel (SUS). The lid 40 may be manufactured by, for example, molding a metal plate using a press.

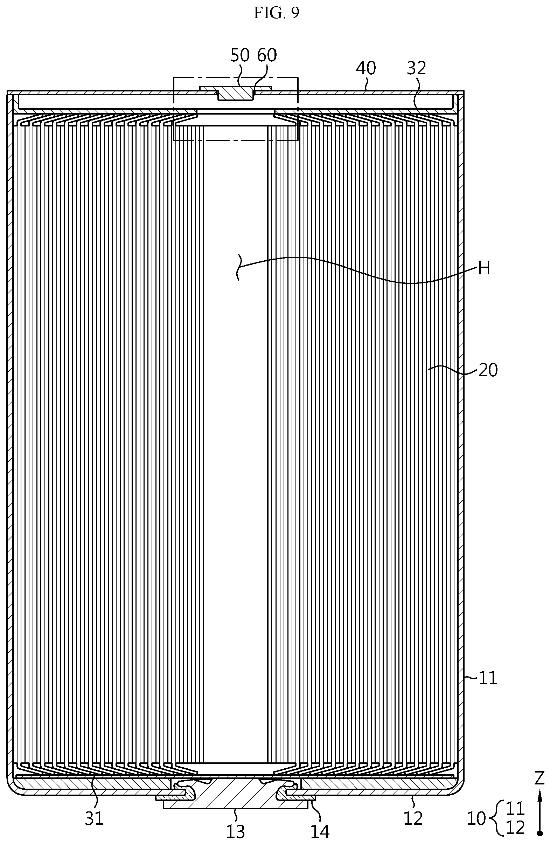

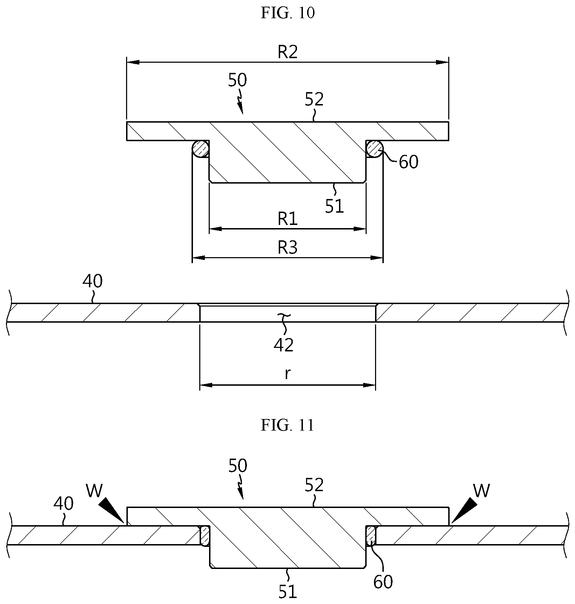

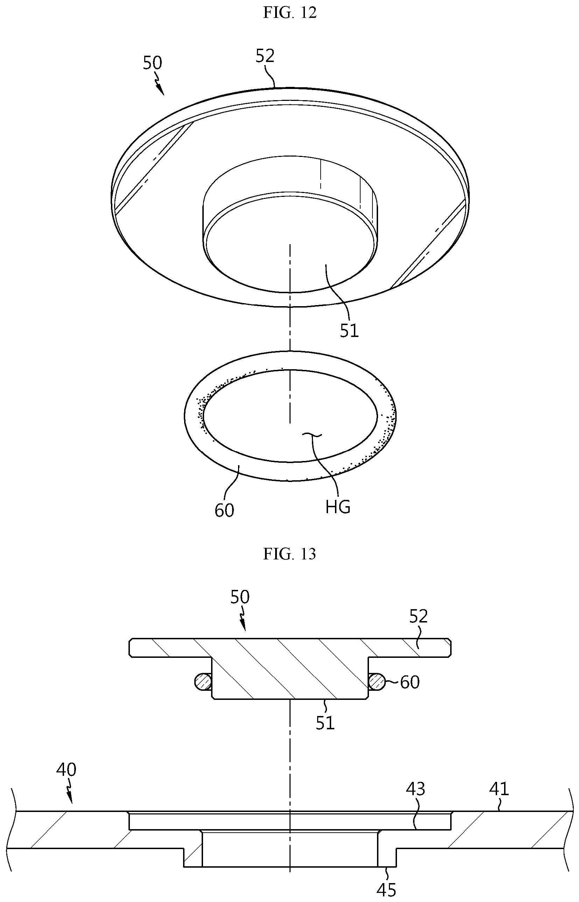

FIG. 9 is a cross-sectional view showing a state in which the injection port of a lid is sealed by a sealing member according to an embodiment of the present disclosure. FIG. 10 is a cross-sectional view showing a state before a sealing member is inserted into the injection port of a lid according to an embodiment of the present disclosure. FIG. 11 is a cross-sectional view showing a state after a sealing member is inserted into the injection port of a lid according to an embodiment of the present disclosure. FIG. 12 is a perspective view showing a state before a sealing member and a gasket are coupled according to an embodiment of the present disclosure.

Referring to FIGS. 9 to 12, a battery cell 1 according to the present disclosure may include an electrode assembly 20, a can 10, a lid 40 in which an injection port 42 is formed, a sealing member 50, and a gasket 60.

The injection port 42 may be provided in the center of the lid 40. The injection port 42 may, for example, serve as an electrolyte injection port.

The injection port 42 may be blocked by the sealing member 50. For example, the sealing member 50 may be inserted into the injection port 42.

The center of the injection port 42 may coincide with the center of the winding center hole H of the electrode assembly 20. That is, the injection port 42 of the lid 40 may be positioned above the winding center hole H of the electrode assembly 20 in the winding axis direction.

Meanwhile, the injection port 42 may be configured to discharge gas generated in the pre charge process to be described later. That is, after the degassing process in which all gases generated in the pre charge process are discharged through the injection port 42, the sealing member 50 may be configured to be coupled onto the injection port 42. Accordingly, the swelling phenomenon of the battery cell 1 may be reduced.

The sealing member 50 may be configured to seal the injection port 42. The sealing member 50 may refer to, for example, a plug, a stopper, or the like that covers the injection port 42. The sealing member 50 may be configured to be inserted into the injection port 42. At least a part of the sealing member 50 may pass through the injection port 42. At least a part of the sealing member 50 may be inserted into the injection port 42. The sealing member 50 is preferably made of a weldable metal. The sealing member 50 may include at least one of low-carbon steel and copper (Cu).

By inserting the sealing member 50 into the injection port 42 of the lid 40, the sealing property of the battery cell 1 may be secured. The sealing member 50 may pass through the injection port 42 formed in the lid 40 to seal the outside and inside of the can 10 and prevent leakage of the electrolyte.

According to this structure, the beading and crimping processes may be omitted, thereby simplifying the manufacturing process. Furthermore, it is possible to prevent a phenomenon in which the dead space within the battery increases in the winding axis direction of the electrode assembly 20 due to the beading and crimping structure and thus the energy density is lowered. That is, according to the structure of the present disclosure, the energy density of the battery cell 1 may be improved.

According to an embodiment, referring to FIG. 10, the sealing member 50 may include a sealing portion 51 and a welded portion 52. A step may be formed between the welded portion 52 and the sealing portion 51 of the sealing member 50.

The sealing portion 51 may be configured to be inserted into at least a part of the injection port 42. For example, the diameter R1 of the sealing portion 51 may be formed to be substantially equal to or smaller than the inner diameter (r) of the injection port 42. For example, the diameter R1 of the sealing portion 51 may be formed to be smaller than the inner diameter (r) of the injection port 42. Therefore, the sealing portion 51 may be inserted into the injection port 42 to adjust the sealing force of the injection port 42. The sealing portion 51 may be inserted into the injection port 42 to primarily cover the injection port 42.

The sealing portion 51 may be positioned further radially inward than the welded portion 52. A step may be formed between the sealing portion 51 and the welded portion 52. The sealing portion 51 may be a recessed portion downward from the welded portion 52 in the winding axis direction. The sealing portion 51 may have a concave shape positioned further downward than the welded portion 52 in the winding axis direction.

The sealing portion 51 may be coupled to a gasket 60 surrounding at least a part of the side surface of the sealing portion 51. The sealing portion 51 coupled to the gasket 60 may be inserted into the injection port 42. For example, the sealing portion 51 coupled to the gasket 60 may be inserted into the injection port 42 by a force-fit method.

According to the above embodiment of the present disclosure, the sealing member 50 may be inserted into the injection port 42 by having the sealing portion 51. Additionally, the sealing portion 51 coupled to the gasket 60 may be pressed into the injection port 42 and remain fixed even before welding. Therefore, the sealing member 50 may be prevented from being detached from the injection port 42 while being transferred to the welding device. That is, the sealing portion 51 coupled to the gasket 60 may be inserted into the injection port 42 before welding the lid 40 and the sealing member 50, thereby first securing primary sealing force. Therefore, deterioration of welding quality due to electrolyte vaporization may be prevented.

Referring to FIG. 11, the welded portion 52 may be configured to cover the injection port 42 on the upper side of the lid 40 and to be mutually welded W with the lid 40. For example, resistance welding, ultrasonic welding, laser welding, or the like may be used for the welding W. The welding W may be performed at the edge part of the welded portion 52 facing the lid 40. For example, the welded portion 52 may be coupled to the lid 40 using butt welding W. At this time, for example, the melting point of the welded portion 52 may be approximately 100 degrees or higher and 1400 degrees or lower. That is, welding may be performed between the welded portion 52 and the lid 40 by applying heat of 100 degrees or higher and 1400 degrees or lower.

The welded portion 52 may extend outward in a radial direction perpendicular to the winding axis direction from the upper end of the sealing portion 51. The diameter R2 of the welded portion 52 may be larger than the diameter R1 of the sealing portion 51. For example, the diameter R2 of the welded portion 52 may be approximately 1.2 times larger than the diameter R1 of the sealing portion 51.

The diameter R2 of the welded portion 52 may be larger than the inner diameter (r) of the injection port 42. Both the sealing portion 51 and the welded portion 52 may have a cylindrical shape with substantially the same center. The sealing portion 51 and the welded portion 52 may have a cylindrical shape with the same center and different outer diameters.

The welded portion 52 may be positioned to face the lid 40. The welded portion 52 may be disposed to overlap at least a part of the lid 40 in the winding axis direction. Alternatively, the welded portion 52 may be disposed horizontally with at least a part of the lid 40.

According to the above embodiment of the present disclosure, it is possible to secure a secondary sealing force higher than the primary sealing force by welding the welded portion 52 and the lid 40. Therefore, high airtightness may be secured. Additionally, compared to cases where sealing force is secured solely by press-in, the press-in force of the sealing member 50 may be significantly reduced, thereby preventing permanent deformation of the lid 40 or the can 10 due to the press-in force.

Additionally, according to the above embodiment of the present disclosure, since welding is performed after securing the primary sealing force, it is possible to prevent the phenomenon of electrolyte vapor leaking to the outside and being ignited during the welding process. Therefore, events caused by thermal runaway in a vehicle including multiple battery cells, such as fire or explosion, may be prevented or delayed.

According to the above embodiment of the present disclosure, the welded portion 52 and the inner circumferential surface of the injection port 42 may be thermally bonded to secure a final sealing force higher than the temporary sealing force. Therefore, the final sealing force may be greater than the temporary sealing force. At this time, the vaporized gas of the electrolyte generated by the welding heat may be prevented from contacting the welded portion 52.

As such, since the temporary sealing force is lower than the final sealing force, compared to cases where sealing force is secured solely by press-in, the press-in force of the sealing member 50 may be significantly reduced, thereby preventing permanent deformation of the lid 40 or the can 10 due to the press-in force.

Additionally, since welding is performed after securing the temporary sealing force, it is possible to prevent the phenomenon of electrolyte vapor leaking to the outside and being ignited during the welding process. Moreover, the sealing portion 51 and the welded portion 52 configured to secure the temporary sealing force are spaced apart in the winding axis direction, which may prevent the electrolyte vapor from directly contacting the welding part. For example, the final sealing force that can be secured by welding may be about 10⁻⁷ atm·cc/s or less based on He leak. That is, high airtightness may be secured.

The gasket 60 may surround at least a part of the sealing member 50. The gasket 60 may be positioned between the injection port 42 and the sealing portion 51, and may be configured to seal the space between the injection port 42 and the sealing portion 51. The gasket 60 may be interposed between the sealing member 50 and the lid 40 to seal the inside and outside of the can 10 to prevent leakage of the electrolyte and to electrically insulate the sealing member 50 from the lid 40. The gasket 60 may be in close contact with the sealing member 50 and the lid 40 between them.

Referring to FIG. 12, the gasket 60 may have a ring shape surrounding at least a part of the side surface of the sealing portion 51. The gasket 60 may be coupled and fixed to the side surface of the sealing portion 51. The gasket 60 may be inserted into the injection port 42 and configured to be in circumferential contact with the inner surface of the injection port 42. A gasket hole HG may be formed at the center of the gasket 60. The sealing member 50 may be disposed to pass through the gasket hole HG. Therefore, it may be easy to seal the injection port 42 in the circumferential direction.

The gasket 60 may include an elastic material. The gasket 60 may include, for example, a polymer material. The gasket 60 may include, for example, an O-ring. The gasket 60 may include, for example, a material such as silicone or urethane having excellent elasticity and sealing properties.

Rubber, which is a material of the gasket 60, is a polymer compound having elastic properties that returns to its original shape when an external force is removed after being deformed by the external force, and thus the gasket may be coupled to the sealing member 50 and simultaneously fixed in position. Since the gasket 60 is easily coupled to the sealing member 50, manufacturing and assembly may be facilitated. Additionally, when the gasket 60 is coupled to the sealing member 50, they may be used and managed as a single component, thereby facilitating management.

The gasket 60 may be coupled and fixed to the side surface of the sealing member 50. For example, an adhesive material, such as a waterproof tape, waterproof bond, or the like, may be included between the gasket 60 and the sealing member 50. When the gasket 60 is coupled and fixed to the side surface of the sealing portion 51, the outer diameter R3 of the gasket 60 may protrude further radially outward than the diameter R1 of the sealing member 51. At this time, the gasket 60 may also be defined as a protrusion.

Additionally, the outer diameter R3 of the gasket 60 may protrude further radially outward than the inner diameter (r) of the injection port 42. Therefore, when the sealing member 50 is inserted into the injection port 42 while the gasket 60 is fitted, it may be compressed and coupled. The gasket 60 may be positioned between the outer surface of the sealing member 50 and the inner surface of the injection port 42, and may be configured to be in close contact with the sealing member 50 and the injection port 42.

The sealing member 50 to which the gasket 60 is coupled may be forcibly fitted into the injection port 42. For example, an overlap dimension between the gasket 60 and the injection port 42 before press-in may be about 50 µm or more and 150 µm or less in the radial direction. For example, the overlap dimension between the gasket 60 and the injection port 42 may be about 70 µm or more and 150 µm or less in the radial direction.

According to the above embodiment of the present disclosure, the outer diameter R3 of the gasket 60 is formed to be larger than the inner diameter (r) of the injection port 42, so that the sealing portion 51 of the sealing member 50 may be forcibly inserted into the injection port 42 through physical force, and the injected electrolyte may be prevented from flowing out of the injection port 42. In other words, by forcibly pressing the sealing member 50, the electrolyte vapor may be prevented from leaking out, and welding defects and ignition may be prevented during laser welding. By forcibly pressing the sealing portion 51 into the injection port 42, physical sealing may be made possible.

That is, according to the above embodiment of the present disclosure, by pressing the sealing portion 51 of the sealing member 50 into the injection port 42 before thermal bonding, it is possible to first secure a temporary sealing force enough to secure a sealing force against the pressure of the vaporized gas of the electrolyte due to the welding heat generated when thermally bonding the lid 40 and the welded portion 52. For example, the temporary sealing force that can be secured by pressing the sealing member 50 may be 10⁻⁵ to 10⁻³ atm·cc/s based on He leak.

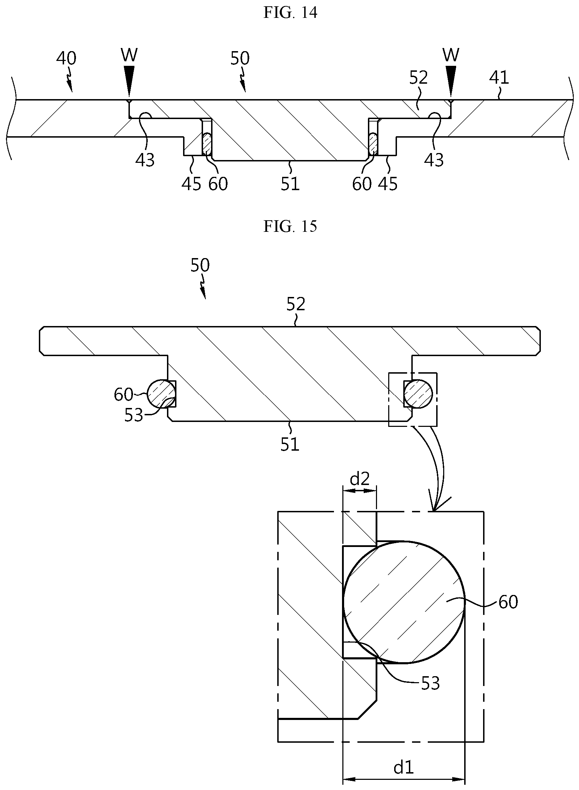

FIG. 13 is a cross-sectional view showing a state before a sealing member is inserted into the injection port of a lid according to another embodiment of the present disclosure. FIG. 14 is a cross-sectional view showing a state after a sealing member is inserted into the injection port of a lid according to another embodiment of the present disclosure.

The lid 40 may form a step in the radial direction based on the periphery of the injection port 42. Specifically, the lid 40 may have a body portion 41 and a recessed portion 43. The lid 40 may be divided into the body portion 41 and the recessed portion 43 based on the step.

The body portion 41 may be configured to be coupled to the can 10. The edge of the body portion 41 may be in perpendicular contact with the opened end of the can 10. The body portion 41 may be welded along the circumferential direction of the part in contact with the opened end of the can 10, which may be defined as a seam welding (this has been described above).

The recessed portion 43 may be a portion that surrounds the injection port 42 and is recessed downward from the body portion 41 in the winding axis direction. The recessed portion 43 may be positioned further radially inward than the body portion 41. The upper surface of the recessed portion 43 may be disposed lower than the upper surface of the body portion 41. That is, a step is formed between the recessed portion 43 and the body portion 41, and the step may be in a ring shape extending in the circumferential direction around the injection port 42. The step may be formed by forging.

The thickness of the recessed portion 43 in the winding axis direction may be formed thinner than the thickness of the body portion 41 in the winding axis direction. The sealing member 50 may be seated on the recessed portion 43. The welded portion 52 of the sealing member 50 may be seated on the recessed portion 43.

According to the above embodiment of the present disclosure, a structure in which the welded portion 52 of the sealing member 50 may be seated may be formed by forging the periphery of the injection port 42.

Additionally, according to the above embodiment of the present disclosure, the recessed portion 43 to which the sealing member 50 is coupled is formed concavely downward toward the electrode assembly 20, so that the overall height of the battery cell may remain constant even when the sealing member 50 is coupled. That is, in a state where the sealing member 50 and the lid 40 are coupled, the sealing member 50 may not protrude upward beyond the upper surface of the lid 40. The total height deviation of the battery cell 1 may not occur. Therefore, the contact part and/or contact area with a component (e.g., a heat sink) disposed on the upper side of the lid 40 may not be restricted by the sealing member 50 and may be maximized.

Additionally, the lid 40 may further include a pipe portion 45. The pipe portion 45 may be a portion extending from the end of the recessed portion 43 in a direction of the winding axis perpendicular to the recessed portion 43. For example, after punching a micro hole in the recessed portion 43, it may be pushed into a rod-shaped mold (determining the inner diameter of the injection port) to form a funnel-shaped pipe portion 45, thereby forming the injection port 42. The injection port 42 may be defined by the pipe portion 45 extending from the central part of the lid 40 in the winding axis direction. That is, the inner circumferential surface of the pipe portion 45 may be defined as the injection port 42. The inner circumferential surface of the injection port 42 may be understood as referring to the inner circumferential surface of the pipe portion 45. For example, the through cross-section of the injection port 42 defined by the inner circumferential surface of the pipe portion 45 may be circular.

According to the above embodiment of the present disclosure, even if the gasket 60 is positioned somewhat at the lower side of the sealing portion 51, the sealing force between the lid 40 and the sealing member 50 may be maintained. That is, the extension length of the pipe portion 45 in the winding axis direction may be designed based on the length of the sealing member 50 in the winding axis direction. For example, the lower surface of the pipe portion 45 may be positioned at substantially the same height as the lower surface of the sealing member 50.

FIG. 15 is a cross-sectional view showing a sealing member and a gasket according to still another embodiment of the present disclosure.

The sealing member 50 may have a groove portion 53 recessed radially inward. The groove portion 53 may be a receiving region for the gasket 60 to allow the gasket 60 to be coupled at a designated position.

The groove portion 53 may be provided at a position where the gasket 60 is disposed. The groove portion 53 may be provided in the sealing portion 51 of the sealing member 50. The groove portion 53 is formed along the outer surface of the sealing portion 51, and may function as a mechanical reference surface for stably fixing the gasket 60 in position.

The gasket 60 may be seated in the groove portion 53. At least a part of the gasket 60 may be inserted into the groove portion 53. The maximum horizontal length d1 of the gasket 60 may be designed to be greater than the horizontal length d2 of the groove portion 53. Therefore, when the sealing member 50 coupled to the gasket 60 is inserted into the injection port 42, the gasket 60 may be compressed to enhance sealing force.

According to the above embodiment of the present disclosure, at least a part of the gasket 60 is inserted into the groove portion 53 and fixed in position, thereby preventing displacement due to vibration, thermal expansion, or external force that may occur during assembly or long-term use. Accordingly, the sealing performance of the gasket 60 may be significantly improved.

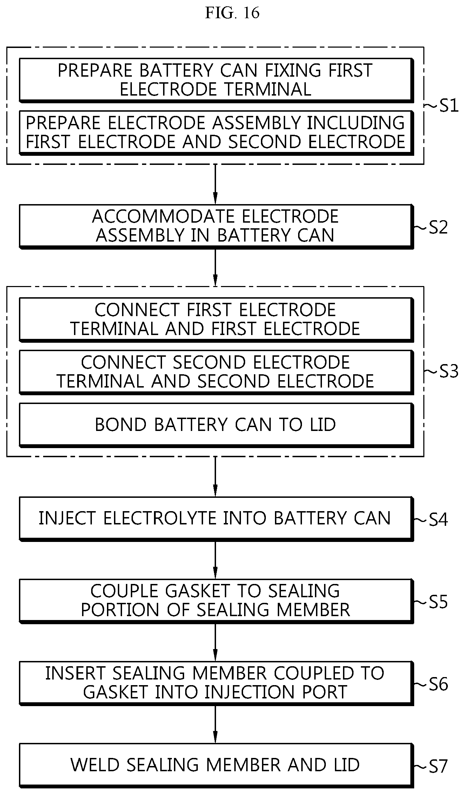

FIG. 16 is a flow chart of a method for manufacturing a battery cell to which the injection port sealing structure of the present disclosure is applied. Hereinafter, a method for manufacturing a battery cell according to an embodiment of the present disclosure will be described with reference to FIG. 16. For convenience of description, it may be described with reference to the drawings of FIGS. 1 to 15.

First, a can 10 in which a first electrode terminal 13 is fixed in an insulating seal to a bottom portion 12, and an electrode assembly 20 including a first current collector plate 31 and a second current collector plate 32 welded to the first electrode and the second electrode at both ends, respectively, may be prepared (S1).

Subsequently, a step of covering the opened end with the lid 40 while the electrode assembly 20 is accommodated in the can 10 may be included (S2).

The electrode assembly 20 may be accommodated in the can 10 in a state where the first current collector plate 31 is aligned toward the bottom portion 12 of the can 10. At this time, an insulator 19 may be interposed between the first current collector plate 31 and the bottom portion 12 of the can 10 to electrically insulate the first current collector plate 31 from the bottom portion 12.

A step of bonding the edge of the lid 40 to the can 10 may be included (S3). The lid 40 and the can 10 may be thermally bonded.

Before bonding the edge of the lid 40 to the can 10, the first current collector plate 31 may be thermally bonded to the first electrode terminal 13. Additionally, the opened end of the can 10 is sealed by covering it with a lid 40, and in order to allow the second current collector plate 32 to be electrically connected to the can 10 and the lid 40, which are the second electrode terminals 15, the second current collector plate 32 may be bonded to the can 10 and/or the lid 40, and the lid 40 and the can 10 may be thermally bonded.

The first current collector plate 31 may be bonded to the first electrode terminal 13 fixed to the can 10 by means of resistance welding, ultrasonic welding, laser welding, or the like. A welding device for welding the first current collector plate 31 and the first electrode terminal 13 may approach the back surface of the center of the first terminal connection portion 312 of the first current collector plate 31 through the open part of the can 10, the hole 322 of the second current collector plate 32, and the winding center hole H of the electrode assembly 20 to perform welding. Of course, in addition to this, the first current collector plate 31 and the first electrode terminal 13 may also be bonded by means of brazing, soldering, or the like. That is, the first current collector plate 31 and the first electrode terminal 13 may be coupled to each other in various ways as long as they may be electrically connected and fixed to each other.

The second current collector plate 32 and the second end of the side wall portion 11 may be bonded by a method such as welding. The can 10 and the edge of the lid 40 may be sealed by a method such as welding. In one example, after the second current collector plate 32 and the can 10 are bonded, the lid 40 and the can 10 may be bonded. In another example, after the second current collector plate 32 and the lid 40 are bonded, the lid 40 and the can 10 may be bonded. In another example, the second current collector plate 32, the can 10, and the lid 40 may be welded at one time.

The edge of the lid 40 may by bonded to the edge of the opened end of the can 10 to be electrically connected. The can 10 or the inner surface of the lid 40 may be electrically connected to the second current collector plate 32. The second current collector plate 32 is bonded to the notching tab 27 of the second electrode 22 of the electrode assembly 20 accommodated inside the can 10 of the battery cell 1, and thus when the lid 40 is electrically connected to the second current collector plate 32, the lid 40 may also be electrically connected to the notching tab 27 of the second electrode 22 of the electrode assembly 20. In a structure where the second current collector plate 32 is omitted, the shape of the lid 40 may be changed so that the lid 40 may be directly electrically connected to the notching tab 27 of the second electrode 22 of the electrode assembly 20.

Next, a step of injecting an electrolyte into the battery can 10 through the injection port 42 of the lid 40 may be included (S4).

Next, a step of coupling the gasket 60 to the sealing portion 51 of the sealing member 50 may be included (S5).

The gasket 60 may surround at least a part of the sealing member 50. The gasket 60 may have a ring shape surrounding at least a part of the side surface of the sealing portion 51. The gasket 60 may be coupled and fixed to the side surface of the sealing portion 51. A gasket hole HG may be formed at the center of the gasket 60. The sealing member 50 may be disposed to pass through the gasket hole HG. Therefore, it may be easy to seal the injection port 42 in the circumferential direction.

The gasket 60 may include an elastic material. The gasket 60 may include, for example, a polymer material. The gasket 60 may include, for example, an O-ring. The gasket 60 may include, for example, a material such as silicone or urethane having excellent elasticity and sealing properties.

Rubber, which is a material of the gasket 60, is a polymer compound having elastic properties that returns to its original shape when an external force is removed after being deformed by the external force, and thus the gasket may be coupled to the sealing member 50 and simultaneously fixed in position. Since the gasket 60 is easily coupled to the sealing member 50, manufacturing and assembly may be facilitated. Additionally, when the gasket 60 is coupled to the sealing member 50, they may be used and managed as a single component, thereby facilitating management.

The gasket 60 may be coupled and fixed to the side surface of the sealing member 50. For example, an adhesive material, such as a waterproof tape, waterproof bond, or the like, may be included between the gasket 60 and the sealing member 50.

Next, after injecting the electrolyte, the sealing member 50 coupled to the gasket 60 may be inserted into the injection port 42 (S6). The gasket 60 is pressed into between the injection port 42 and the sealing member 50, thereby sealing the space between the injection port 42 and the sealing member 50.

Specifically, the sealing portion 51 of the sealing member 50 may be inserted into the injection port 42. Here, the sealing member 50 may be in a state where a gasket 60 is coupled. For example, the sealing portion 51 coupled to the gasket 60 may be inserted into the injection port 42 by a force-fit method. According to the above embodiment of the present disclosure, the sealing portion 51 of the sealing member 50 may be forcibly inserted into the injection port 42, and the electrolyte formed therein may be prevented from flowing out of the injection port 42. In other words, by forcibly pressing the sealing member 50, the electrolyte vapor may be prevented from leaking out, and welding defects and ignition may be prevented during laser welding. By forcibly pressing the sealing portion 51 into the injection port 42, physical sealing may be made possible.

Additionally, according to the above embodiment of the present disclosure, by pressing the sealing portion 51 of the sealing member 50 into the injection port 42 before thermal bonding, it is possible to first secure a temporary sealing force enough to secure a sealing force against the pressure of the vaporized gas of the electrolyte due to the welding heat generated when thermally bonding the lid 40 and the welded portion 52. For example, the temporary sealing force that can be secured by pressing the sealing member 50 may be 10⁻⁵ to 10⁻³ atm·cc/s based on He leak.

That is, the sealing member 50 according to one aspect of the present disclosure is configured to be coupled to the gasket 60, thereby implementing double sealing.

Additionally, when a ball or rivet, which is a conventional rigid body, is pressed into the injection port 42 with a very strong force, the problem of scratches has occurred. In contrast, according to the above embodiment of the present disclosure, by disposing a gasket 60 made of an elastic material between the rigid sealing member 50 and the injection port 42, scratches may be prevented from occurring inside the injection port 42 or on the sealing member 50.

Finally, a step of welding the sealing member 50 and the lid 40 may be included (S7).

The sealing process may first secure a temporary sealing force by pressing the sealing member 50 into the injection port 42, and then secure a final sealing force by welding and sealing the welded portion 52 of the sealing member 50 and the lid 40.

For example, the welded portion 52 of the sealing member 50 and the lid 40 may be laser welded. Laser welding may be defined as a process of melting and bonding metals using a laser beam having high energy density.

The final sealing force may be greater than the temporary sealing force. For example, the final sealing force that can be secured by welding may be about 10⁻⁷ atm·cc/s or less based on He leak. That is, high airtightness may be secured.

According to the above embodiment of the present disclosure, since welding is performed after securing the temporary sealing force, it is possible to prevent the phenomenon such as the formation of gas channels or the occurrence of cracks during the welding process, thereby preventing defects of the welded portion 52.

Additionally, according to the above embodiment of the present disclosure, since welding is performed after securing the temporary sealing force, it is possible to prevent the phenomenon of electrolyte vapor leaking to the outside and being ignited during the welding process.

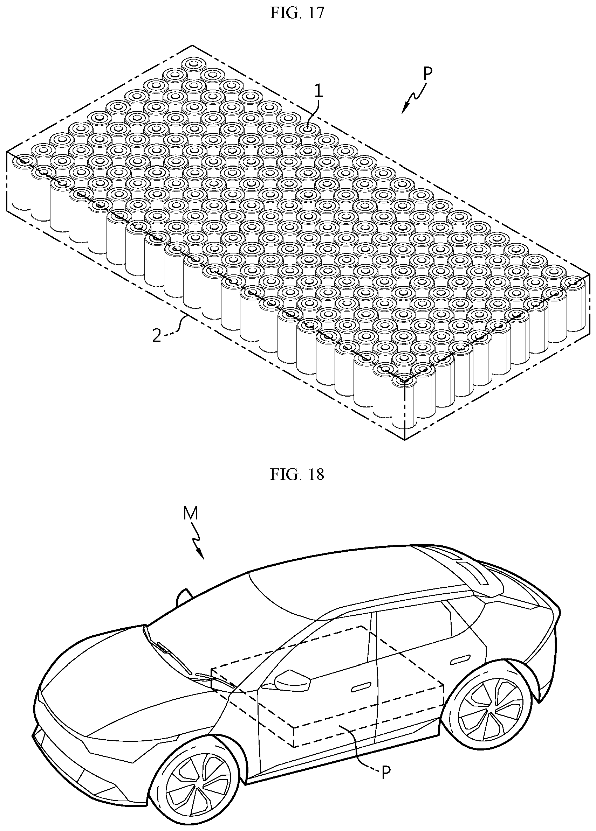

FIG. 17 is a view for describing a battery pack according to an embodiment of the present disclosure. FIG. 18 is a view for describing a vehicle including the battery pack of FIG. 17.

Referring to FIG. 17, a battery pack P according to the present disclosure may include at least one battery cell 1 according to the present disclosure described above. Additionally, the battery pack P according to the present disclosure may include a pack housing 2 capable of accommodating the at least one battery cell 1. The battery pack P may be configured using a battery module, which is an intermediate form of assembly, or may be configured directly without a battery module as illustrated. Since the battery cell 1 itself has a large volume, there may be no particular difficulty in implementing the battery pack P even without using an intermediate structure called a battery module.

In addition, the battery pack P may further include various components in addition to the battery cell 1, for example, components of the battery pack P known at the time of filing of the present disclosure, such as a BMS, a relay, a current sensor, and the like.

A plurality of battery cells 1 may be included in the battery pack P. The battery cells 1 may be arranged in a predetermined number of rows, and may be arranged so that both the first electrode terminal 13 and the second electrode terminal 15 are placed on the upper side in each battery cell 1. Therefore, when electrically connecting the plurality of battery cells 1, both the positive electrode and the negative electrode may be connected in one direction, thereby simplifying the electrical connection structure. Accordingly, energy density may be improved by increasing the number of battery cells 1 that can be mounted in the same space, and electrical wiring work may be facilitated. Therefore, the space efficiency is excellent, and the electrical wiring efficiency is high, which has a significant improvement effect in the assembly process of an electric vehicle, and the assembly and maintenance of the battery pack P. And, each battery cell 1 may have a higher energy density than a conventional cell, as described above. The battery pack P with the increased energy density in this way may store the same energy while reducing the volume and weight thereof.

Therefore, if the battery pack P to which these battery cells 1 are applied is mounted on a vehicle such as a vehicle M using electricity as an energy source as illustrated in FIG. 18, the mileage of the vehicle per unit of energy may be further expanded.

Referring to FIG. 18, a vehicle M according to the present disclosure may include at least one battery pack P according to the present disclosure.

The battery cell 1 according to the present disclosure may be applied to vehicles such as electric vehicles or hybrid vehicles. That is, the vehicle M according to the present disclosure may include the battery cell 1 according to the present disclosure or the battery pack P according to the present disclosure. Additionally, the vehicle M according to the present disclosure may further include various other components included in the vehicle, in addition to the battery cell 1 or the battery pack P. For example, the vehicle M according to the present disclosure may further include a vehicle body, a motor, a control device such as an electronic control unit (ECU), and the like, in addition to the battery cell 1 according to the present disclosure. The vehicle M includes a four-wheeled vehicle and a two-wheeled vehicle. The vehicle M may operate by receiving power from the battery pack P according to an embodiment of the present disclosure.

The present disclosure has been described hereinabove with reference to a limited number of embodiments and drawings, but the present disclosure is not limited thereto and it is obvious that a variety of modifications and variations may be made thereto by those having ordinary skill in the art within the technical aspect of the present disclosure and the scope of the appended claims and their equivalents.

## Claims

1. A battery cell comprising:
an electrode assembly in which a first electrode, a second electrode, and a separator interposed therebetween are wound around a winding axis;
a can configured to accommodate the electrode assembly through an opened end formed on one side;
a lid covering the opened end and having an injection port;
a sealing member that has a sealing portion configured to be inserted into at least a part of the injection port and a welded portion configured to cover the injection port on an upper side of the lid and to be mutually welded to the lid, and is configured to seal the injection port; and
a gasket surrounding at least a part of the sealing member.

2. The battery cell according to claim 1,
wherein the gasket has a ring shape surrounding at least a part of the side surface of the sealing portion.

3. The battery cell according to claim 1,
wherein the gasket is positioned between the injection port and the sealing portion, and is configured to seal the space between the injection port and the sealing portion.

4. The battery cell according to claim 1,
wherein the outer diameter of the gasket is larger than the inner diameter of the injection port.

5. The battery cell according to claim 1,
wherein the welded portion extends outward in a radial direction perpendicular to the winding axis direction from the upper end of the sealing portion.

6. The battery cell according to claim 1,
wherein the diameter of the welded portion is larger than the inner diameter of the injection port.

7. The battery cell according to claim 1,
wherein the lid comprises a body portion; and
a recessed portion that surrounds the injection port and is recessed downward from the body portion in the winding axis direction.

8. The battery cell according to claim 7,
wherein the welded portion is configured to be seated on the recessed portion.

9. The battery cell according to claim 1,
wherein the sealing member has a groove portion recessed radially inward.

10. The battery cell according to claim 9,
wherein the gasket is seated in the groove portion.

11. The battery cell according to claim 9,
wherein the maximum horizontal length of the gasket is greater than the horizontal length of the groove portion.

12. The battery cell according to claim 1,
wherein the can and the lid are thermally bonded.

13. A method for manufacturing a battery cell according to any one of claims 1 to 12, the method comprising:
a step of covering the opened end of the can with the lid while accommodating the electrode assembly in the can;
a step of thermally bonding the edge of the lid to the can;
a step of injecting an electrolyte into the can through the injection port of the lid;
a step of coupling a gasket to the sealing portion of a sealing member;
a step of inserting the sealing member coupled to the gasket into the injection port to seal the space between the injection port and the sealing member; and
a step of welding the welded portion of the sealing member and the lid.

14. A battery pack comprising a battery cell according to any one of claims 1 to 12.

15. A vehicle equipped with a battery pack according to claim 14.
